# EUROPEAN PATENT APPLICATION

(11) **EP 3 674 031 A1**
(43) Date of publication of application: **01.07.2020**
(21) Application number: 18847454.8
(22) Date of filing: 23.08.2018
(51) Int. Cl.: B23K 26/348, B23K 9/16, B23K 26/21

(54) **HYBRID WELDING METHOD AND HYBRID WELDING APPARATUS**

(30) Priority: 24.08.2017 JP 2017160787
(71) Applicant: IHI INSPECTION & INSTRUMENTATION CO., LTD., Tokyo 140-0013 (JP); TADANO LTD., Takamatsu-shi, Kagawa 761-0185 (JP)
(72) Inventor: OWAKI, Katsura, Yokohama-city Kanagawa 235-8501 (JP); MAKI, Satomi, Yokohama-city Kanagawa 235-8501 (JP); YAMAMOTO, Kosei, Takamatsu-shi Kagawa 761-0185 (JP); MATSUO, Hiroki, Takamatsu-shi Kagawa 761-0185 (JP)
(74) Representative: Banzer, Hans-Jörg
(86) International application number: PCT/JP2018/031087
(87) International publication number: WO 2019/039529

(57) **Abstract**

To provide a hybrid welding method and a hybrid welding apparatus that can perform welding without dropping a weld metal even in a case of butt-welding in which a gap is present between base materials.

A hybrid welding apparatus 1 according to the present invention is a hybrid welding apparatus that butt-welds a first joint J1 and a second joint J2 using laser welding and arc welding, and includes a laser welding device 2 that includes a laser head 21 that irradiates laser light L to a welded portion and an arc welding device 3 that includes a welding torch 31 that supplies a filler metal W to the welded portion. It is configured such that the laser head 21 is capable of performing horizontal welding and disposed on an upstream side in a welding direction, the welding torch 31 is capable of performing horizontal welding and disposed on a downstream side in the welding direction, and horizontal welding is performed with the first joint J1 and the second joint J2 disposed vertically so as to obtain a substantially horizontal weld line.

## Description

### Technical Field

The present invention relates to a hybrid welding method and a hybrid welding apparatus, and in particular, to a hybrid welding method and a hybrid welding apparatus that are suitable for butt-welding in which a gap is present between base materials.

### Background Art

For example, a boom that is a component of a crane vehicle, an aerial work vehicle, a bridge inspection vehicle or the like is a long steel structure having a hollow tubular shape. In recent years, such a boom is formed into a long tubular shape by butt-welding both open end portions of steel materials having a substantially U-shaped cross section.

For example, Patent Literature 1 discloses a welding method of welding an upper steel plate that is a long high-tension steel plate bent into a U-shaped cross section to a lower steel plate that is a long high-tension steel plate which is bent into a U-shaped cross section with a larger bending radius than that of the upper steel plate and has a larger plate thickness than the upper steel plate at their end surfaces to produce a boom having a tubular cross section. In the welding method, a butt joint part of edges of the upper steel plate and the lower steel plate is welded by hybrid welding in which arc welding precedes laser welding without using a backing strip. In the preceding arc welding, a butt surface of the upper steel plate and the lower steel plate is melted and a molten metal of a filler metal is added to a molten metal of the base material. In the following laser welding, the molten metal and the base materials in the butt joint part are melted in a depth direction of the joint part.

### Citation List

### Patent Literature

Patent Literature 1: Japanese Patent No. 6085010

### Summary of Invention

### Technical Problem

However, in downward welding in which welding is performed from vertically above in a weld line, when arc welding precedes laser welding, a weld metal generated during arc welding is irradiated with laser light, and thus pressed by the laser light and drops. In particular, the weld metal tends to drop in a case of butt-welding in which a gap is present between base materials. Moreover, in order to prevent the weld metal from dropping, a backing material is eventually required.

The present invention has been achieved in view of such problems, and an object of the invention is to provide a hybrid welding method and a hybrid welding apparatus that can perform welding without dropping a weld metal even in a case of butt-welding in which a gap is present between base materials.

### Solution to Problem

According to the present invention, there is provided a hybrid welding method that butt-welds a first joint and a second joint using laser welding and arc welding. The hybrid welding method includes performing horizontal welding in which the laser welding precedes the arc welding with the first joint and the second joint disposed vertically.

The first joint and the second joint may have a gap along a weld line at least partially.

In the hybrid welding method, the arc welding may be performed while the gap is filled with a base material melted by the laser welding.

A light diameter of laser light used for the laser welding may be set to be larger than a maximum value of the gap, and a diameter of a filler metal used for the arc welding may be set to be smaller than the maximum value of the gap.

An incident angle of laser light at a time of the laser welding is about 90°, for example.

Among the first joint and the second joint, a joint having a larger plate thickness may be disposed on a lower side.

The first joint may be constituted by both end portions of a cross section of a steel material having a substantially U-shaped or substantially semicircular cross section, and the second joint may be constituted by a steel material having a cross section including both end portions facing the both end portions of the first joint. At this time, two weld lines on the left and right of the steel material may be simultaneously welded in the same direction, or the two weld lines on the left and right of the steel material may be simultaneously welded in opposite directions.

According to the present invention, there is provided a hybrid welding apparatus that butt-welds a first joint and a second joint using laser welding and arc welding. The hybrid welding apparatus includes a laser head that irradiates laser light to a welded portion, and a welding torch that supplies a filler metal to the welded portion. The laser head is capable of performing horizontal welding and disposed on an upstream side in a welding direction, the welding torch is capable of performing horizontal welding and disposed on a downstream side in the welding direction, and horizontal welding is performed with the first joint and the second joint disposed vertically.

### Advantageous Effects of Invention

According to the hybrid welding method and the hybrid welding apparatus according to the present invention described above, the base material (molten metal) melted by the preceding laser welding drops by its own weight, and thus even when the gap is present between the first joint and the second joint, the gap can be filled with the melted base material (molten metal) and the arc welding can be effectively performed without dropping a weld metal.

### Brief Description of Drawings

Fig. 1 is a plan view illustrating an overall configuration of a hybrid welding apparatus according to an embodiment of the present invention.
Fig. 2 is a cross-sectional view illustrating the principle of a hybrid welding method according to a first embodiment of the present invention, where (A) illustrates an initial state, (B) illustrates a state before arc welding, and (C) illustrates a state after welding is completed.
Fig. 3 is a view illustrating a cross-sectional macro of a test piece, where (A) illustrates a first comparative example, (B) illustrates a second comparative example, (C) illustrates a first test piece, and (D) illustrates a second test piece.
Fig. 4 is a cross-sectional view illustrating an example of a workpiece that is a welding target, where (A) illustrates a first example, (B) illustrates a second example, (C) illustrates a third example, and (D) illustrates a fourth example.
Fig. 5 is a view illustrating a hybrid welding method according to other embodiments of the present invention, where (A) illustrates a second embodiment and (B) illustrates a third embodiment.

### Description of Embodiments

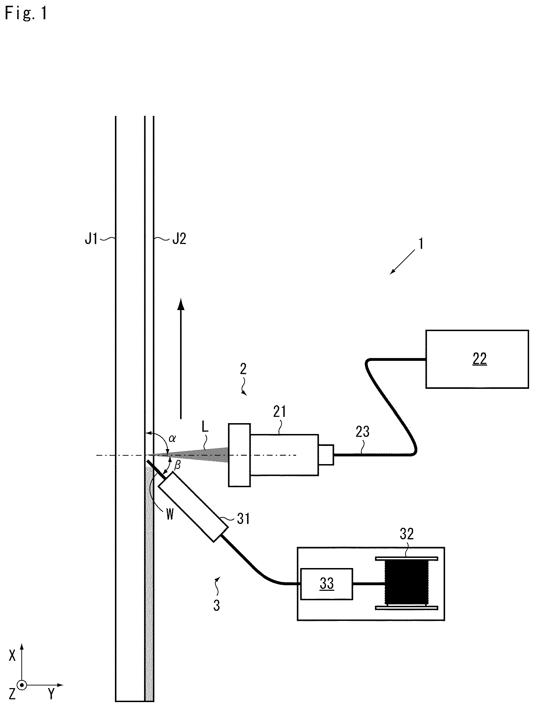

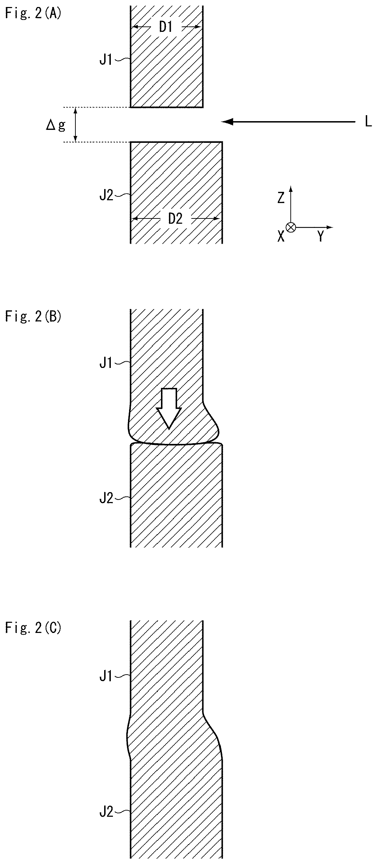

Hereinafter, embodiments of the present invention will be described with reference to Fig. 1 to Fig. 5(B). Here, Fig. 1 is a plan view illustrating an overall configuration of a hybrid welding apparatus according to an embodiment of the present invention. Fig. 2 is a cross-sectional view illustrating the principle of a hybrid welding method according to a first embodiment of the present invention, where (A) illustrates an initial state, (B) illustrates a state before arc welding, and (C) illustrates a state after welding is completed.

A hybrid welding apparatus 1 according to an embodiment of the present invention is, as illustrated in Fig. 1 for example, a hybrid welding apparatus that butt-welds a first joint J1 and a second joint J2 using laser welding and arc welding, and includes a laser welding device 2 that includes a laser head 21 that irradiates laser light L to a welded portion and an arc welding device 3 that includes a welding torch 31 that supplies a filler metal W to the welded portion. It is configured such that the laser head 21 is capable of performing horizontal welding and disposed on an upstream side in a welding direction, the welding torch 31 is capable of performing horizontal welding and disposed on a downstream side in the welding direction, and horizontal welding is performed with the first joint J1 and the second joint J2 disposed vertically.

Here, for the convenience of description, as illustrated in Fig. 1 and Fig. 2(A), an X axis is set in a direction along a weld line, a Y axis is set in a horizontal direction perpendicular to the X axis, and a Z axis is set in a vertical direction.

The laser welding device 2 includes, for example, the laser head 21, a laser oscillator 22 that generates laser light, and an optical fiber 23 that transports laser light from the laser oscillator 22 to the laser head 21. Although not illustrated, the laser welding device 2 may include a fixing unit that fixes the laser head 21 at a predetermined position and a robot arm that movably supports the laser head 21.

For example, the laser head 21 is positioned such that the laser light L is irradiated perpendicularly to a welded portion. That is, an incident angle α of the laser light L on an XY plane is set to about 90°. Consequently, even when the laser light L is irradiated perpendicularly, if a gap is formed in the welded portion, the amount of reflection of the laser light L is small and the laser light L is absorbed by a base material (molten metal) melted by the laser light L. The laser head 21 is thus less damaged by reflected light of the laser light L. The incident angle α of the laser light L may be set to be smaller than 90°.

The arc welding device 3 includes, for example, the welding torch 31, a welding wire drum 32 in which the filler metal W (welding wire) is wound in a coil shape, and a welding wire feeding device 33 that feeds the filler metal W from the welding wire drum 32 to the welding torch 31. Although not illustrated, the arc welding device 3 may include a fixing unit that fixes the welding torch 31 at a predetermined position and a shielding gas supply unit that supplies a shielding gas to a welded portion.

For example, the welding torch 31 is positioned such that an incident angle β of the filler metal W on the XY plane is about 45°. Alternatively, the welding torch 31 may be positioned so as to be parallel to a YZ plane, or may be positioned so as to be inclined to the YZ plane.

As illustrated in Fig. 1, the laser welding device 2 is disposed upstream of the arc welding device 3 in the welding direction (X-axis direction). That is, the laser head 21 is disposed upstream of the welding torch 31 in the welding direction (X-axis direction). Consequently, the hybrid welding apparatus 1 according to the present embodiment is configured such that laser welding precedes arc welding in hybrid welding using both laser welding and arc welding.

The first joint J1 and the second joint J2 are, for example, steel plates having a predetermined shape. As illustrated in Fig. 2(A), the first joint J1 and the second joint J2 are butt-welded with the second joint J2 disposed downward and the first joint J1 disposed upward. It is assumed that a plate thickness D2 of the second joint J2 is larger than a plate thickness D1 of the first joint J1. That is, in the present embodiment, among the first joint J1 and the second joint J2, a joint having a larger plate thickness is disposed on a lower side.

In addition, as the first joint J1 and the second joint J2 are formed of a steel plate, not a few machining errors and deformations are included in these joints. As illustrated in Fig. 2(A), in some cases, a gap Δg is formed in the welded portion in the Z axis direction. When the laser light L is irradiated horizontally (Y axis direction) to the welded portion including this gap Δg, the base material of the first joint J1 is melted to drop downward by its own weight as illustrated in Fig. 2(B). The gap Δg formed between the first joint J1 and the second joint J2 is thus filled with the base material (molten metal) melted by the laser light L.

In the present embodiment, the melted base material (molten metal) of the first joint J1 drops on an end portion of the second joint J2. The plate thickness D2 of the second joint J2 is thus preferably larger than the plate thickness D1 of the first joint J1 from the viewpoint that the second joint J2 functions as a tray receiving the melted base material of the first joint J1. It is needless to mention that the plate thickness D2 of the second joint J2 may be equal to the plate thickness D1 of the first joint J1, or the plate thickness D2 of the second joint J2 may be less than the plate thickness D1 of the first joint J1, if necessary.

As laser welding precedes as described above, arc welding can be performed while the gap Δg is filled with the melted base material (molten metal), and an excellent bead with less weld defects can be formed as illustrated in Fig. 2(C).

When irradiated to the welded portion, the laser light L needs to heat at least a lower end of the first joint J1. A light diameter of the laser light L is thus set to be larger than a maximum value of the gap Δg on the weld line. Meanwhile, as the gap Δg is narrowed at a time of arc welding, a diameter of the filler metal W may be set to be smaller than the maximum value of the gap Δg.

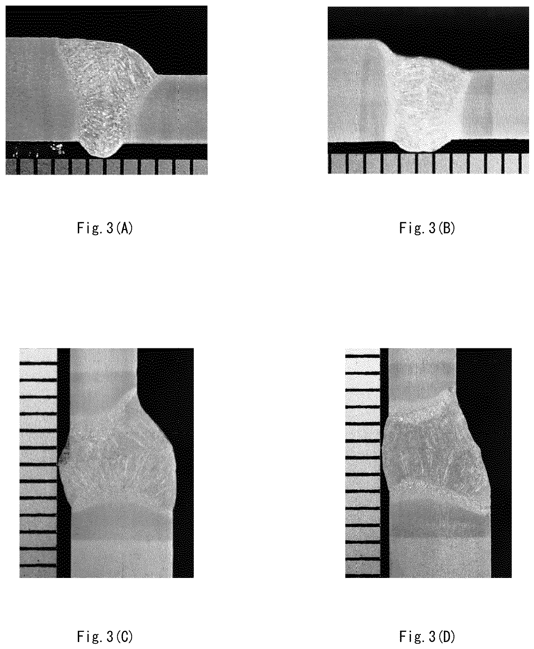

Here, Fig. 3 is a view illustrating a cross-sectional macro of a test piece, where (A) illustrates a first comparative example, (B) illustrates a second comparative example, (C) illustrates a first test piece, and (D) illustrates a second test piece. The division of the scale is 1 mm in each figure.

The first comparative example illustrates a case where conventional downward welding is performed with a gap of 0 mm, the second comparative example illustrates a case where the conventional downward welding is performed with a gap of 1 mm, the first test piece illustrates a case where horizontal welding is performed with a gap of 0 mm, and the second test piece illustrates a case where the horizontal welding is performed with a gap of 1 mm. In either case, hybrid welding is performed under the same conditions while laser welding precedes and arc welding.

As in the invention described in Patent Literature 1 described above, when arc welding precedes laser welding in downward welding, a weld metal drops by laser light, resulting in poor welding. Further, even when laser welding precedes in downward welding as in the first comparative example and the second comparative example, a bead projects greatly on a back side, or weld defects such as undercut and underfill occur on a front side, as illustrated in Fig. 3(A) and Fig. 3(B).

When the bead projects greatly, mechanical machining needs to be performed on the projecting portion, which increases the number of work steps and a work time. In addition, when weld defects occur, the weld defects need to be corrected manually.

On the other hand, when laser welding precedes in horizontal welding as in the present embodiment, it is possible to perform high quality welding as illustrated in Fig. 3(C) and Fig. 3(D), where a bulge of the bead projecting on the back side is reduced and no weld defects such as undercut and underfill are found in the bead on the front side.

According to the hybrid welding apparatus and the hybrid welding method according to the present embodiment described above, horizontal welding is performed in which laser welding precedes arc welding with the first joint J1 and the second joint J2 disposed vertically. The base material (molten metal) melted by the preceding laser welding can thus drop by its own weight. Consequently, even when the gap Δg is present between the first joint J1 and the second joint J2, the gap Δg can be filled with the melted base material (molten metal) and arc welding can be effectively performed without dropping a weld metal.

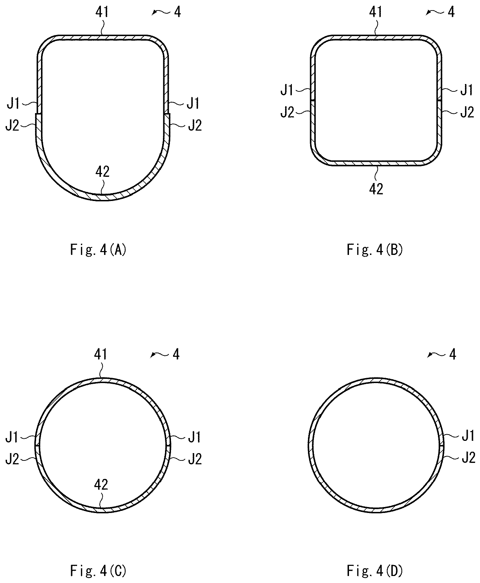

Next, a shape of a workpiece 4 to be welded by the hybrid welding method according to the present embodiment will be described. Here, Fig. 4 is a cross-sectional view illustrating an example of a workpiece that is a welding target, where (A) illustrates a first example, (B) illustrates a second example, (C) illustrates a third example, and (D) illustrates a fourth example.

The workpiece 4 illustrated in Fig. 4(A) is a tubular steel material such as a boom or a jib used for a crane vehicle and an aerial work vehicle, for example. The workpiece 4 in an orientation in use is vertically divided into two portions. An upper workpiece 41 has an angular U-shaped cross section, and a lower workpiece 42 has a round U-shaped cross section. In general, the plate thickness of the lower workpiece 42 is formed to be larger than the plate thickness of the upper workpiece 41. The first joint J1 is constituted by both end portions of the upper workpiece 41, and the second joint J2 is constituted by both end portions of the lower workpiece 42.

The workpiece 4 illustrated in Fig. 4(B) is a hollow steel material having a substantially quadrangular prism shape used for a column of a steel structure, for example. The workpiece 4 is divided into two portions along a longitudinal direction, and at the time of welding, one is disposed on the upper side to be the upper workpiece 41 and the other is disposed on the lower side to be the lower workpiece 42. The upper workpiece 41 and the lower workpiece 42 have the same shape, and each has an angular U-shaped cross section. The first joint J1 is constituted by both end portions of the upper workpiece 41, and the second joint J2 is constituted by both end portions of the lower workpiece 42.

The workpiece 4 illustrated in Fig. 4(C) is a hollow cylindrical steel material used for a pipe, for example. The workpiece 4 is divided into two portions along the longitudinal direction, and at the time of welding, one is disposed on the upper side to be the upper workpiece 41 and the other is disposed on the lower side to be the lower workpiece 42. The upper workpiece 41 and the lower workpiece 42 have the same shape, and each has a semicircular cross section. The first joint J1 is constituted by both end portions of the upper workpiece 41, and the second joint J2 is constituted by both end portions of the lower workpiece 42.

The workpieces 4 described above are merely examples and are not limited to these shapes. That is, it is only required that the first joint J1 is constituted by both end portions of the cross section of a steel material having a substantially U-shaped or substantially semicircular cross section, and the second joint J2 is constituted by a steel material having a cross section including both end portions facing the both end portions of the first joint J1.

Further, the workpiece 4 illustrated in Fig. 4(D) is a hollow cylindrical steel material used for a pipe, for example. The workpiece 4 is formed by bending a long steel plate into a circular shape, and at the time of welding, joints at both ends are placed horizontally. The first joint J1 is constituted by an end portion of the steel plate disposed on the upper side, and the second joint J2 is constituted by an end portion of the steel plate disposed on the lower side. As described above, the workpiece 4 may have a welded portion only on one side in the longitudinal direction.

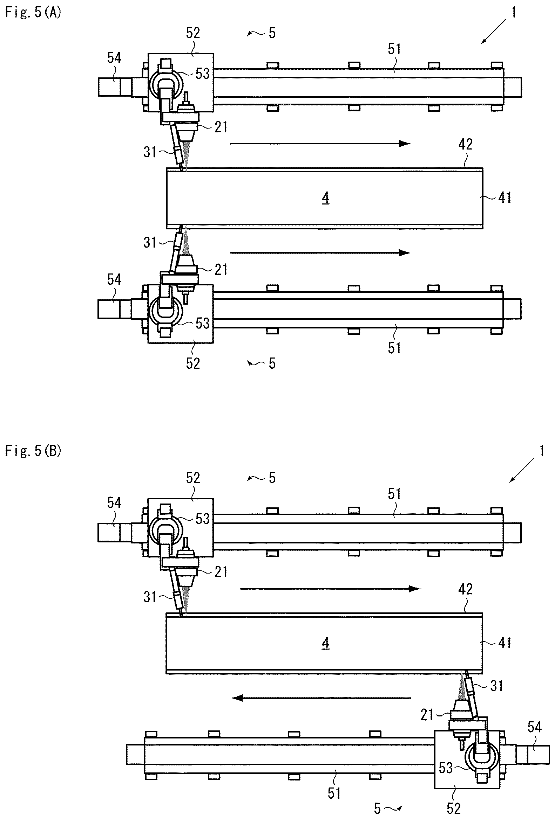

Next, a welding method in a case where a welded portion is present on both left and right sides of a steel material like the workpiece 4 illustrated in Fig. 4(A). Here, Fig. 5 is a view illustrating a hybrid welding method according to other embodiments of the present invention, where (A) illustrates a second embodiment and (B) illustrates a third embodiment. In each figure, the laser welding device 2 and the arc welding device 3 are simplified.

In a welding method according to the second embodiment illustrated in Fig. 5(A), two weld lines on the left and right of the workpiece 4 are welded simultaneously in the same direction. In a welding method according to the third embodiment illustrated in Fig. 5(B), two weld lines on the left and right of the workpiece 4 are simultaneously welded in opposite directions. The hybrid welding apparatus 1 that performs these welding methods includes a movement unit 5 that moves the laser head 21 and the welding torch 31 horizontally along the workpiece 4.

The movement unit 5 includes a rail 51 disposed in parallel on both sides of the workpiece 4 and a carriage 52 that travels on the rail 51. The carriage 52 includes a support member 53 that supports the laser head 21 and the welding torch 31, and a drive motor 54 that causes the carriage 52 to travel by itself. A unit that drives the carriage 52 is not limited to the illustrated configuration.

In the second embodiment illustrated in Fig. 5(A), the carriages 52 placed on the left and right sides of the workpiece 4 are set on the same side (left side in Fig. 5(A)) on the rails 51, and are synchronized to be moved in the same direction. In the third embodiment illustrated in Fig. 5(B), the carriages 52 placed on the left and right sides of the workpiece 4 are set on the opposite sides (left side and right side in Fig. 5(B)) on the rails 51, and are synchronized to be moved in opposite directions.

As described above, as welded portions on the left and right sides of the workpiece 4 are simultaneously welded by horizontal welding, the weld time can be reduced and deformations of the workpiece 4 due to a heat input during welding can be reduced. When the workpiece 4 has the welded portion only on one side, the movement unit 5 having the rail 51 and the carriage 52 may be disposed only on one side of the workpiece 4.

The present invention is not limited to the embodiments described above, and it is needless to mention that various modifications can be made without departing from the spirit of the present invention.

### Reference Signs List

- 1: hybrid welding apparatus
- 2: laser welding device
- 3: arc welding device
- 4: workpiece
- 5: movement unit
- 21: laser head
- 22: laser oscillator
- 23: optical fiber
- 31: welding torch
- 32: welding wire drum
- 33: welding wire feeding device
- 41: upper workpiece
- 42: lower workpiece
- 51: rail
- 52: carriage
- 53: support member
- 54: drive motor
- J1: first joint
- J2: second joint

## Claims

1. A hybrid welding method that butt-welds a first joint and a second joint using laser welding and arc welding, the hybrid welding method comprising:
performing horizontal welding in which the laser welding precedes the arc welding with the first joint and the second joint disposed vertically.

2. The hybrid welding method according to claim 1, wherein the first joint and the second joint have a gap along a weld line at least partially.

3. The hybrid welding method according to claim 2, wherein the arc welding is performed while the gap is filled with a base material melted by the laser welding.

4. The hybrid welding method according to claim 2, wherein a light diameter of laser light used for the laser welding is set to be larger than a maximum value of the gap, and a diameter of a filler metal used for the arc welding is set to be smaller than the maximum value of the gap.

5. The hybrid welding method according to claim 1, wherein an incident angle of laser light at a time of the laser welding is about 90°.

6. The hybrid welding method according to claim 1, wherein among the first joint and the second joint, a joint having a larger plate thickness is disposed on a lower side.

7. The hybrid welding method according to claim 1, wherein the first joint is constituted by both end portions of a cross section of a steel material having a substantially U-shaped or substantially semicircular cross section, and the second joint is constituted by a steel material having a cross section including both end portions facing the both end portions of the first joint.

8. The hybrid welding method according to claim 7, wherein two weld lines on left and right sides of the steel material are simultaneously welded in a same direction.

9. The hybrid welding method according to claim 7, wherein two weld lines on left and right sides of the steel material are simultaneously welded in opposite directions.

10. A hybrid welding apparatus that butt-welds a first joint and a second joint using laser welding and arc welding, the hybrid welding apparatus comprising:
a laser head that irradiates laser light to a welded portion; and
a welding torch that supplies a filler metal to the welded portion,
wherein the laser head is capable of performing horizontal welding and disposed on an upstream side in a welding direction,
the welding torch is capable of performing horizontal welding and disposed on a downstream side in the welding direction, and
horizontal welding is performed with the first joint and the second joint disposed vertically.
